**Europäisches Patentamt**

**European Patent Office**

**Office européen des brevets**

(11) Veröffentlichungsnummer: **0 283 895 B1**

(12) **EUROPÄISCHE PATENTSCHRIFT**

(45) Veröffentlichungstag der Patentschrift: **24.06.92**

(21) Anmeldenummer: **88104029.9**

(22) Anmeldetag: **14.03.88**

(51) Int. Cl.⁵: **H02H 3/04**

(54) **Elektrisches Schutzgerät.**

(30) Priorität: **27.03.87 DE 3710204**

(43) Veröffentlichungstag der Anmeldung:
**28.09.88 Patentblatt 88/39**

(45) Bekanntmachung des Hinweises auf die
Patenterteilung:
**24.06.92 Patentblatt 92/26**

(84) Benannte Vertragsstaaten:
**AT CH DE FR GB IT LI SE**

(56) Entgegenhaltungen:
**DE-A- 1 513 490**
**DE-A- 2 428 011**
**DE-A- 2 941 505**
**DE-A- 3 421 829**
**FR-A- 2 319 945**

(73) Patentinhaber: **SIEMENS AKTIENGESELL-
SCHAFT**
**Wittelsbacherplatz 2**
**W-8000 München 2(DE)**

(72) Erfinder: **Fröhlich, Paul, Dipl.-Ing.**
**Theodor-Heuss-Strasse 1**
**W-8458 Sulzbach-Rosenberg(DE)**

Rank Xerox (UK) Business Services

**Beschreibung**

Die Erfindung bezieht sich auf ein elektrisches Schutzgerät zur Fehlerüberwachung von elektrischen Geräten, vorzugsweise elektrischen Maschinen, mit einer Einrichtung zur Erfassung des Fehlers und einer fehlerabhängigen Auslöse- und Test- bzw. Rücksetzvorrichtung, wobei die Testvorrichtung derart ausgebildet ist, daß nach Aktivierung eines Testzyklus und Abgabe eines Auslösesignales die Testfunktion zeitabhängig selbsttätig unterbrochen wird und daß nach Ablauf dieser Zeit oder eines weiteren Testzyklus durch Passivierung der Testvorrichtung der Rücksetzvorgang erfolgt.

Eine Einrichtung der obengenannten Art ist aus der DE-A-15 13 490 und der DE-A-29 41 505 bekannt. Bei der letzteren ist für das Einleiten des Testvorganges ein Taster und für das Rücksetzen eines Speichergliedes ein gesonderter weiterer Taster vorgesehen.

Bei einem weiterhin bekannten Schaltgerät (3 UB) ist eine getrennte Test- und Resettaste vorhanden. Wird hier die Testtaste eine gewisse Zeit gedrückt, erfolgt hier zeitverzögert über einen simulierten Strom die Testauslösung, was durch eine LED angezeigt wird. Das Rücksetzen der Auslösung ist erst nach Ablauf einer vorgegebenen Zeit, die beispielsweise der Abkühlzeit eines Motors entspricht, möglich. Hierzu muß die gesonderte Resettaste gedrückt und wieder losgelassen werden. Die Funktion der Rücksetzung wird durch Erlöschen der LED angezeigt.

Der vorliegenden Erfindung liegt die Aufgabe zugrunde, die Test- und Rücksetz-(Reset)-Funktion mit nur einem Betätigungsorgan durchführen zu können. Dies wird auf einfache Weise dadurch erreicht, daß die Vorrichtung ein einziges Betätigungsorgan für die Test- und Rücksetzfunktion aufweist und daß der Rücksetzvorgang durch Wiederloslassen des Betätigungsorganes nach einer vorgebbaren Zeit oder nach Loslassen des Betätigungsorganes nach einem weiteren Testzyklus nach einer vorgebbaren Zeit erfolgt. Hierdurch ergibt sich neben der Raum- und Kosteneinsparung auch eine definierte Testdauer für das Schutzgerät und die angeschlossene Verdrahtung.

Um auch eine eindeutige Funktion des Schutzgerätes nach Spannungsausfall sicherzustellen ist es vorteilhaft, wenn zur Speicherung des Abschaltens der Testfunktion ein nicht flüchtiger Speicher vorgesehen ist. Eine Pufferung des Speichers bzw. das Vorsehen eines E²Prom-Speichers kann vermieden werden, wenn der nicht flüchtige Speicher ein bistabiles Relais ist. Hierdurch ergibt sich eine relativ preiswerte Ausführung. Um spezielle Motordaten berücksichtigen zu können, beispielsweise das noch nicht Abgekühltsein eines Motors, ist es vorteilhaft, wenn eine Vorrichtung zur Freigabe der Rückstellung vorgesehen ist. Um derartige Zustände mit Sicherheit berücksichtigen zu können ist es weiterhin von Vorteil, wenn die Vorrichtung zur Freigabe zusammen mit dem Signal zur Passivierung der Testvorrichtung über eine UND-Verknüpfung miteinander verbunden sind.

Auf eine gesonderte Logik bei analogem Schaltungsaufbau kann verzichtet werden, wenn die UND-Verknüpfung über zwei Comparatorausgänge realisiert wird, deren open-Kollektorausgänge parallelgeschaltet sind.

Anhand der Zeichnung werden Ausführungsbeispiele gemäß der Erfindung beschrieben und die Wirkungsweise näher erläutert. Es zeigen:

FIG 1    die Zuordnung der Testzyklen zur Testfunktion und dem Auslösesignal und

FIG 2    eine Prinzipdarstellung der kombinierten Test- und Resetfunktion.

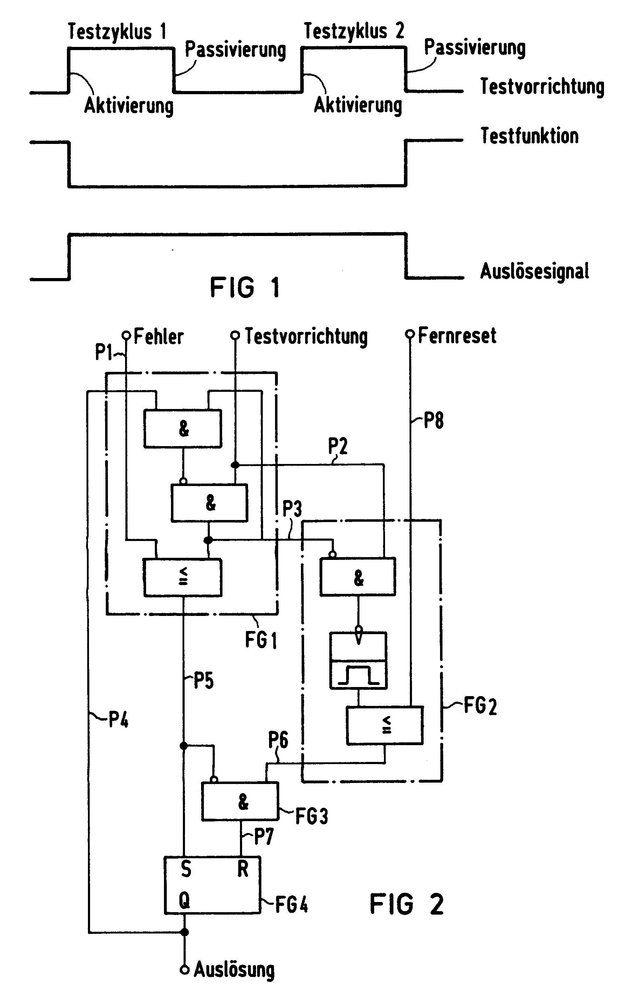

Der obere Linienzug in FIG 1 stellt die Testzyklen der Testvorrichtung dar, d.h. er gibt wieder, ob der kombinierte Test-Reset-Taster des Schutzgerätes gedrückt oder losgelassen ist. Der mittlere Linienzug stellt die Testfunktion dar und der untere das Auslösesignal. Beim Aktivieren der Testvorrichtung, d.h. Drücken des Tasters und unter der Voraussetzung, daß das Gerät nicht durch vorhandenen Fehler ausgelöst hat, wird die Abschaltfunktion und die entsprechende Speicherung aktiviert und das Gerät wechselt in den Auslösezustand (siehe unteren Linienzug). Beim Übergang in den Auslöse- bzw. Speicherzustand wird die Testfunktion aufgehoben (siehe mittleren Linienzug). Dieser Zustand ist zumindest für die Dauer des Drückens des Tasters nicht löschbar gespeichert. Während der Dauer dieser Speicherung ist auch die Rücksetzung nicht möglich. Wie die FIG 1 zeigt, ist nach Aktivierung des ersten Zyklus, und auch nach Öffnen des Testtasters die Speicherfunktion weiter erhalten. Erst nach Durchfahren eines weiteren Testzyklus (Testzyklus 2), d.h. Passivierung (Wiederloslassen des Tastschalters) wird die Testfunktion wieder aktiviert und das Auslösesignal abgeschaltet, d.h. das Schutzgerät selbst ist wieder zurückgesetzt und kann durch Fehlersignale ausgeschaltet werden. Anstelle der zwei Testzyklen kann auch ein Testzyklus verwandt werden. Hier bestimmt die Testfunktion, beispielsweise ein entsprechend der Abkühlzeit dimensioniertes integriertes Zeitglied, das Rücksetzen. Wird der erste Testzyklus vor Erreichen dieser Zeit passiviert, erfolgt keine Rücksetzung. Erst nach Ablauf dieser Zeit erfolgt durch Passivierung des Testzyklus die Rücksetzung. Dies kann auch durch einen weiteren Testzyklus erfolgen. Das Schutzgerät selbst ist so ausgebildet, daß Fehlersignale aus dem Netz gegenüber Tests immer vorrangig sind. Das Auslösesignal kann bei elektrischen Maschinen beispielsweise durch eine thermische Nachbildung durch Erfassen des Motorstromes oder aber auch durch direkte Erfassung der Motortemperatur über Thermistoren erzeugt werden. Je nach Gerätetyp kann eine gewisse Rücksetzzeit berücksichtigt werden, die in der Rückschaltbereitschaft als Signal berücksichtigt werden kann, d.h. die Passivierung des zweiten Testzyklus kann nur dann zur Zurücksetzung führen, wenn auch das Signal rückschaltbereit vorhanden ist, was durch eine nicht näher dargestellte UND-Verknüpfung vorgenommen werden kann.

Der Zustand "Gerät ausgelöst" kann zeitlich unbegrenzt bis zur Passivierung des zweiten Testzyklus gespeichert werden. Dies gilt auch nach Ab- und wieder Zuschaltung der Versorgungsspannung, indem nicht flüchtige Speicher hierzu verwandt werden. Wird beispielsweise die Testtaste betätigt und das Gerät hat bereits ausgelöst, so kann eine Abfragung des Zustandes beispielsweise durch einen Mikroprozessor vorgenommen werden, wann die Rücksetzfunktion möglich ist. Man kann dann eine automatische Rücksetzung vorsehen, die unabhängig von der Testvorrichtung wirkt. Nach Passivierung des zweiten Testzyklus ist, wie die FIG 1 zeigt, eine Reaktivierung der Testfunktion bei nicht ausgelöstem Gerät automatisch vorhanden.

Zur Wirkungsweise der kombinierten Test- und Resetfunktion gemäß FIG 2 ist folgendes auszuführen: Bei einem Fehler, d.h. Potential an P1 wird P4 aktiviert. Über die Funktionsgruppe 3 wird P 7 gesperrt - kein Rückschalten möglich.

Bei Aktivierung der Testvorrichtung im ersten Testzyklus kommt es über P5 zu einem gespeicherten Auslösesignal P4. Über einen Selbsthaltekreis in Funktionsgruppe 1 wird über P3 die Funktionsgruppe 2 (Reset) gesperrt. Diese Sperrung kann auch zeitverzögert erfolgen. Gleichzeitig wird über P4 die Testfunktion abgeschaltet.

Die Passivierung der Testvorrichtung im ersten Testzyklus kommt wegen der Verriegelung über P3 nicht zur Geltung. Die Aktivierung der Testvorrichtung im zweiten Testzyklus wird über P4 gesperrt.

Die Passivierung der Testvorrichtung im zweiten Testzyklus führt über die Funktionsgruppen 2 und 3 zu einem Rücksetzen des Speichers in der Funktionsgruppe 4. Die UND-Verknüpfung in Funktionsgruppe 3 stellt sicher, daß die Passivierung der Testvorrichtung nur bei Freigabe über P5 möglich ist.

Die Verknüpfung des Signals zur Passivierung der Testvorrichtung mit einer Fernreset- oder Automatikresetmöglichkeit erfolgt über P 8 in Funktionsgruppe 2.

**Patentansprüche**

1. Elektrisches Schutzgerät zur Fehlerüberwachung von elektrischen Geräten, vorzugsweise elektrischen Maschinen, mit einer Einrichtung zur Erfassung des Fehlers (P1) und einer fehlerabhängigen Auslöse- und Test- bzw. Rücksetzvorrichtung (FG1, FG2), wobei die Testvorrichtung derart ausgebildet ist, daß nach Aktivierung eines Testzyklus (1, 2) und Abgabe eines Auslösesignales (P5) die Testfunktion zeitabhängig selbsttätig unterbrochen wird (P3) und daß nach Ablauf dieser Zeit oder eines weiteren Testzyklus durch Passivierung der Testvorrichtung der Rücksetzvorgang erfolgt, **dadurch gekennzeichnet,** daß die Vorrichtung ein einziges Betätigungsorgan für die Test- und Rücksetzfunktion aufweist (P2) und daß der Rücksetzvorgang durch Wiederloslassen des Betätigungsorganes nach einer vorgebbaren Zeit oder nach Loslassen des Betätigungsorganes nach einem weiteren Testzyklus nach einer vorgebbaren Zeit erfolgt.

2. Schutzgerät nach Anspruch 1, **dadurch gekennzeichnet,** daß zur Speicherung des Abschaltens der Testfunktion ein nicht flüchtiger Speicher (FG 4) vorgesehen ist.

3. Schutzgerät nach Anspruch 2, **dadurch gekennzeichnet,** daß der nicht flüchtige Speicher ein bistabiles Relais ist.

4. Schutzgerät nach Anspruch 1, **dadurch gekennzeichnet,** daß eine Vorrichtung zur Freigabe der Rückstellung vorgesehen ist.

5. Schutzgerät nach Anspruch 4, **dadurch gekennzeichnet,** daß die Vorrichtung zur Freigabe zusammen mit dem Signal zur Passivierung der Testvorrichtung über eine UND-Verknüpfung miteinander verbunden sind.

6. Schutzgerät nach Anspruch 5, **dadurch gekennzeichnet,** daß die UND-Verknüpfung über zwei Comparatorausgänge realisiert wird, deren open-Kollektorausgänge parallelgeschaltet sind.

**Claims**

1. Electrical protection apparatus for error control of electrical apparatus, preferably electric machines, having a device for detecting the error (P1) and an error-dependent tripping and testing or resetting arrangement (FG1, FG2), the testing arrangement being formed such that after activation of a test cycle (1, 2) and output of a tripping signal (P5) the test function is automatically interrupted (P3) in a time-dependent manner and in that at the end of this time or of a further test cycle as a result of passivation of the testing arrangement, the resetting process occurs, characterised in that the arrangement has a single actuating element for the testing and resetting function (P2) and in that the resetting process occurs by re-releasing the actuating element after a time, which can be preset, or after releasing the actuating element after a further test cycle after a time which can be preset.

2. Protection apparatus according to claim 1, characterised in that a non-volatile memory (FG 4) is provided for storing the cut-off of the test function.

3. Protection apparatus according to claim 2, characterised in that the non-volatile memory is a bistable relay.

4. Protection apparatus according to claim 1, characterised in that an arrangement is provided for the purpose of enabling the resetting.

5. Protection apparatus according to claim 4, characterised in that the arrangement for enabling purposes together with the signal for passivation of the testing arrangement are connected with each other by way of an AND operation.

6. Protection apparatus according to claim 5, characterised in that the AND operation is realized by way of two comparator outputs, the open collector outputs of which are connected in parallel.

**Revendications**

1. Dispositif de protection électrique pour le contrôle de défauts d'appareils électriques, de préférence de machines électriques, comportant un dispositif pour détecter le défaut (P1) et un dispositif (FG1,FG2) de déclenchement et de test ou de remise à l'état initial, qui dépend du défaut, le dispositif de test étant agencé de manière qu'après l'activation d'un cycle de test (1,2) et la délivrance d'un signal de déclenchement (P5), la fonction de test est interrompue (P3) automatiquement en fonction du temps et qu'après l'écoulement de cet intervalle de temps ou d'un autre cycle de test, l'opération de remise à l'état initial s'effectue au moyen d'une passivation du dispositif de test, caractérisé par le fait que le dispositif comporte (P2) un seul organe d'actionnement pour la fonction de test et la fonction de remise à l'état initial, et que l'opération de remise à l'état initial est exécutée au moyen d'un nouveau relâchement de l'organe d'actionnement après un intervalle de temps pouvant être prédéterminé ou après le relâchement de l'organe d'actionnement après un nouveau cycle de test après un intervalle de temps pouvant être prédéterminé.

2. Dispositif de protection suivant la revendication 1, caractérisé par le fait que pour la mémorisation de l'interruption de la fonction de test, il est prévu une mémoire non volatile (FG4).

3. Dispositif de protection suivant la revendication 2, caractérisé par le fait que la mémoire non volatile est un relais bistable.

4. Dispositif de protection suivant la revendication 1, caractérisé par le fait qu'il est prévu un dispositif pour autoriser la remise à l'état initial.

5. Dispositif de protection suivant la revendication 4, caractérisé par le fait que le dispositif d'autorisation et le signal servant à réaliser la passivation du dispositif de test sont reliés entre eux par l'intermédiaire d'une combinaison ET.

6. Dispositif de protection suivant la revendication 5, caractérisé par le fait que la combinaison ET est réalisée au moyen de deux sorties d'un comparateur, dont les sorties à collecteur ouvert sont branchées en parallèle.

Testzyklus 1    Passivierung    Testzyklus 2    Passivierung

Aktivierung    Aktivierung    Testvorrichtung

Testfunktion

Auslösesignal

## FIG 1

Fehler    Testvorrichtung    Fernreset

P1

P8

&

P2

&

P3

&

≦

FG1

P5

P4

≦    FG2

P6

&    FG3

P7

S    R

Q    FG4    FIG 2

Auslösung